# EUROPEAN PATENT APPLICATION

(11) **EP 4 614 923 A1**
(43) Date of publication of application: **10.09.2025**
(21) Application number: 23884551.5
(22) Date of filing: 09.10.2023
(51) Int. Cl.: H04L 41/16

(54) **AI/ML MODEL MONITORING METHOD, DEVICE, APPARATUS, AND STORAGE MEDIUM**

(30) Priority: 04.11.2022 CN 202211379438
(71) Applicant: Datang Mobile Communications Equipment Co., Ltd., Beijing 100085 (CN)
(72) Inventor: YAN, Xue, Beijing 100085 (CN); LIANG, Jing, Beijing 100085 (CN); ZENG, Erlin, Beijing 100085 (CN); WANG, Da, Beijing 100085 (CN); FEI, Yongqiang, Beijing 100085 (CN)
(74) Representative: Ipsilon
(86) International application number: PCT/CN2023/123528
(87) International publication number: WO 2024/093619

(57) **Abstract**

Provided in the embodiments of the present disclosure are an AI/ML model monitoring method, a device, an apparatus, and a storage medium. The method comprises: when detecting that the performance of at least one AI/ML model among AI/ML models on the two sides or of an AI/ML model pair on the two sides does not meet a model performance requirement, a first communication device sends first information to a second communication device, the first information comprising information related to monitoring of the AI/ML models on the two sides.

## Description

### CROSS-REFERENCES TO RELATED APPLICATIONS

The present application claims priority to Chinese patent application No. 202211379438.6 filed on November 04, 2022, entitled "AI/ML Model Monitoring Method, Device, Apparatus, and Storage Medium", which is hereby incorporated by reference in its entirety.

### FIELD

The present application relates to the field of radio communication, and in particular, to methods and apparatuses for artificial intelligence (AI)/machine learning (ML) model monitoring, devices and a storage medium.

### BACKGROUND

A two-sided artificial intelligence (AI)/machine learning (ML) model includes two AI/ML models locating at different nodes and jointly completing a task. For example, a one-side AI/ML model is at a user equipment (UE) side and a one-side AI/ML model is at a network side (such as a base station or other network-side devices). Channel state information (CSI) feedback enhancement is taken as an example, the two-sided AI/ML model may be applied to the UE side and the network side respectively to realize a spatial-frequency domain CSI compression function. That is, the UE side uses the AI/ML model for compression, and the network side uses the AI/ML model for decompression.

During the use of the AI/ML model, it is necessary to monitor performance of the AI/ML model to determine whether the performance of a current AI/ML model is good or meets a requirement, especially in case that monitored performance of the AI/ML model is poor, it should be handled accordingly in time. However, there is no clear handle solution for this.

### BRIEF SUMMARY

In view of the problems in the related art, embodiments of the present application provide methods and apparatuses for artificial intelligence (AI)/machine learning (ML) model monitoring, devices and a storage medium.

An embodiment of the present application provides a method for AI ML model monitoring, performed by a first communication device, including:
in case of monitoring that performance of at least one-side AI/ML model or a two-side AI/ML model pair of a two-sided AI/ML model does not meet a model performance requirement, transmitting first information to a second communication device, where the first information includes information associated with monitoring the two-sided AI/ML model.

In any embodiment of the present application, the first information includes one or more types of the following:
first indication information, used to indicate that the performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, the method further includes:
changing a first-communication-device-side AI/ML model or falling back a first-communication-device-side AI/ML model to a non-AI/ML-model-based operation mode.

In any embodiment of the present application, a changed first-communication-device-side AI/ML model is determined based on one or more of the following:
a priority order of AI/ML models; or
a mapping relationship between an AI/ML model and an applicable scenario; or
randomly selecting an AI/ML model.

In any embodiment of the present application, changing the first-communication-device-side AI/ML model or falling back the first-communication-device-side AI/ML model to the non-AI/ML-model-based operation mode includes:
based on second information transmitted from the second communication device, changing the first-communication-device-side AI/ML model or falling back the first-communication-device-side AI/ML model to the non-AI/ML-model-based operation mode;
where the second information includes one or more types of the following:
   sixth indication information, used to indicate the first communication device to change the first-communication-device-side AI/ML model or fall back the first-communication-device-side AI/ML model to the non-AI/ML-model-based operation mode;
   identity information of a changed second communication device-side AI/ML model; or
   identity information of a first-communication-device-side AI/ML model corresponding to a changed second communication device-side AI/ML model.

In any embodiment of the present application, the method further includes:
receiving monitoring configuration information, where the monitoring configuration information includes one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

In any embodiment of the present application, the identity information of the AI/ML model includes one or more of the following:
a model identity of an AI/ML model;
a model configuration identity of an AI/ML model;
a parameter value of an AI/ML model; or
input and output information of an AI/ML model.

In any embodiment of the present application, monitoring that the performance of the at least one-side AI/ML model or the two-side AI/ML model pair of the two-sided AI/ML model does not meet the model performance requirement includes any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

An embodiment of the present application provides a method for AI ML model monitoring, performed by a second communication device, including:
receiving first information transmitted from a first communication device, where the first information includes information associated with monitoring a two-sided AI/ML model.

In any embodiment of the present application, the first information includes one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, after receiving first information transmitted from the first communication device, the method further includes:
transmitting second information to the first communication device, where the second information includes one or more types of the following:
sixth indication information, used to indicate the first communication device to change a first-communication-device-side AI/ML model or fall back a first-communication-device-side AI/ML model to a non-AI/ML-model-based operation mode;
identity information of a changed second communication device-side AI/ML model; or
identity information of a first-communication-device-side AI/ML model corresponding to a changed second communication device-side AI/ML model.

An embodiment of the present application further provides a first communication device, including a memory, a transceiver, and a processor,
where the memory is used for storing a computer program; the transceiver is used for receiving and sending data under control of the processor; the processor is used for reading the computer program in the memory and performing the following operations:
in case of monitoring that performance of at least one-side artificial intelligence (AI)/machine learning (ML) model or a two-side AI/ML model pair of a two-sided AI/ML model does not meet a model performance requirement, transmitting first information to a second communication device, where the first information includes information associated with monitoring the two-sided AI/ML model.

In any embodiment of the present application, the first information includes one or more types of the following:
first indication information, used to indicate that the performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, the operations further include:
changing a first-communication-device-side AI/ML model or falling back a first-communication-device-side AI/ML model to a non-AI/ML-model-based operation mode.

In any embodiment of the present application, a changed first-communication-device-side AI/ML model is determined based on one or more of the following:
a priority order of AI/ML models; or
a mapping relationship between an AI/ML model and an applicable scenario; or
randomly selecting an AI/ML model.

In any embodiment of the present application, changing the first-communication-device-side AI/ML model or falling back the first-communication-device-side AI/ML model to the non-AI/ML-model-based operation mode includes:
based on second information transmitted from the second communication device, changing the first-communication-device-side AI/ML model or falling back the first-communication-device-side AI/ML model to the non-AI/ML-model-based operation mode;
where the second information includes one or more types of the following:
   sixth indication information, used to indicate the first communication device to change the first-communication-device-side AI/ML model or fall back the first-communication-device-side AI/ML model to the non-AI/ML-model-based operation mode;
   identity information of a changed second communication device-side AI/ML model; or
   identity information of a first-communication-device-side AI/ML model corresponding to a changed second communication device-side AI/ML model.

In any embodiment of the present application, the operations further include:
receiving monitoring configuration information, where the monitoring configuration information includes one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

In any embodiment of the present application, the identity information of the AI/ML model includes one or more of the following:
a model identity of an AI/ML model;
a model configuration identity of an AI/ML model;
a parameter value of an AI/ML model; or
input and output information of an AI/ML model.

In any embodiment of the present application, monitoring that the performance of the at least one-side AI/ML model or the two-side AI/ML model pair of the two-sided AI/ML model does not meet the model performance requirement includes any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

An embodiment of the present application further provides a second communication device, including a memory, a transceiver, and a processor,
where the memory is used for storing a computer program; the transceiver is used for receiving and sending data under control of the processor; the processor is used for reading the computer program in the memory and performing the following operations:
receiving first information transmitted from a first communication device, where the first information includes information associated with monitoring a two-sided artificial intelligence (AI)/machine learning (ML) model.

In any embodiment of the present application, the first information includes one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, after receiving first information transmitted from the first communication device, the operations further include:
transmitting second information to the first communication device, where the second information includes one or more types of the following:
sixth indication information, used to indicate the first communication device to change a first-communication-device-side AI/ML model or fall back a first-communication-device-side AI/ML model to the non-AI/ML-model-based operation mode;
identity information of a changed second communication device-side AI/ML model; or
identity information of a first-communication-device-side AI/ML model corresponding to a changed second communication device-side AI/ML model.

An embodiment of the present application further provides an apparatus for artificial intelligence (AI)/machine learning (ML) model monitoring, including:
a first transmitting unit, used for in case of monitoring that performance of at least one-side AI/ML model or a two-side AI/ML model pair of a two-sided AI/ML model does not meet a model performance requirement, transmitting first information to a second communication device, where the first information includes information associated with monitoring the two-sided AI/ML model.

An embodiment of the present application further provides an apparatus for artificial intelligence (AI)/machine learning (ML) model monitoring, including:
a second receiving unit, used for receiving first information transmitted from a first communication device, where the first information includes information associated with monitoring a two-sided AI/ML model.

An embodiment of the present application further provides a computer-readable storage medium storing a computer program, where the computer program causes a computer to perform any of the methods for artificial intelligence (AI)/machine learning (ML) model monitoring described above.

An embodiment of the present application further provides a communication device storing a computer program, where the computer program causes the communication device to perform any of the methods for artificial intelligence (AI)/machine learning (ML) model monitoring described above.

An embodiment of the present application further provides a processor-readable storage medium storing a computer program, where the computer program causes a processor to perform any of the methods for artificial intelligence (AI)/machine learning (ML) model monitoring described above.

An embodiment of the present application further provides a chip product storing a computer program, where the computer program causes the chip product to perform any of the methods for artificial intelligence (AI)/machine learning (ML) model monitoring described above.

In the methods and apparatuses for AI/ML model monitoring, the devices and the storage medium provided in the embodiments of the present application, in case of monitoring that the performance of the at least one-side AI/ML model or the two-side AI/ML model pair of the two-sided AI/ML model does not meet the model performance requirement, the first communication device transmits first information to the second communication device, where the first information includes information associated with monitoring the two-sided AI/ML model. The first communication device and the second communication device may take corresponding actions to ensure the normal use of the two-sided AI/ML model or the normal operation of this function.

### BRIEF DESCRIPTION OF THE DRAWINGS

To illustrate solutions in the embodiments of the present application more clearly, the drawings that need to be used in the descriptions of the embodiments are briefly described below. The drawings in the following description are some embodiments of the present application, and other drawings may be obtained based on these drawings without any creative work for those skilled in the related art.
FIG. 1 is a first schematic flowchart of a method for artificial intelligence (AI)/machine learning (ML) model monitoring according to an embodiment of the present application;
FIG. 2 is a second schematic flowchart of a method for AI/ML model monitoring according to an embodiment of the present application;
FIG. 3 is a schematic structural diagram of a first communication device according to an embodiment of the present application.
FIG. 4 is a schematic structural diagram of a second communication device according to an embodiment of the present application.
FIG. 5 is a first schematic structural diagram of an apparatus for AI/ML model monitoring according to an embodiment of the present application; and
FIG. 6 is a second schematic structural diagram of an apparatus for AI/ML model monitoring according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Some contents associated with embodiments of the present application are firstly introduced to facilitate a clearer understanding of the solutions of the embodiments of the present application.

### (1) Two-sided artificial intelligence (AI)/machine learning (ML) model

A two-sided AI/ML model includes two AI/ML models locating at different nodes and jointly completing a task. For example, a one-side AI/ML model is at a user equipment (UE) side and a one-side AI/ML model is at a network side (such as a base station or other network-side devices). Channel state information (CSI) feedback enhancement is taken as an example, the two-sided AI/ML model may be applied to the UE side and the network side respectively to realize a spatial-frequency domain CSI compression function. That is, the UE side uses the AI/ML model for compression, and the network side uses the AI/ML model for decompression.

### (2) AI/ML model monitoring

During the use of AI/ML models, performance of AI/ML models needs to be monitored to determine whether performance of a current AI/ML model is good or meets a requirement. Many ways to monitor the performance of AI/ML models exist, and different monitoring ways may be adopted based on different usage scenarios and functions.

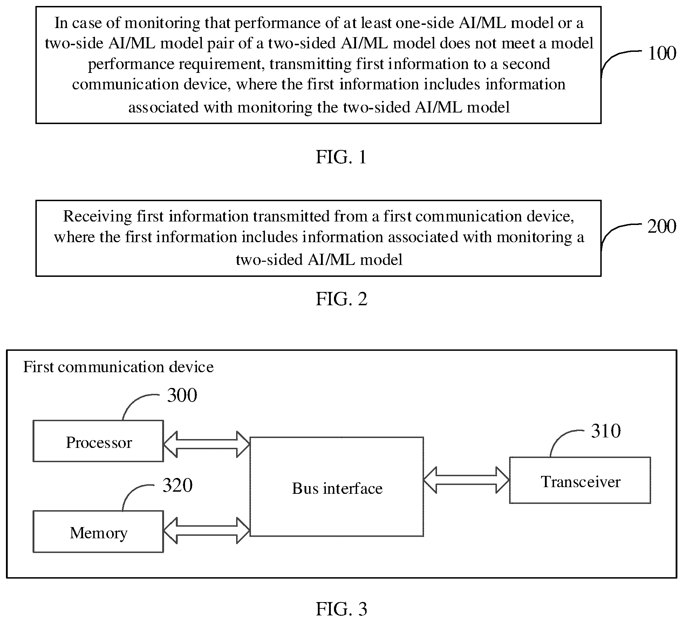

FIG. 1 is a first schematic flowchart of a method for AI/ML monitoring according to an embodiment of the present application. As shown in FIG. 1, the method is performed by a first communication device and includes the following steps.

Step 100: in case of monitoring that performance of at least one-side AI/ML model or a two-side AI/ML model pair of a two-sided AI/ML model does not meet a model performance requirement, transmitting first information to a second communication device, where the first information includes information associated with monitoring the two-sided AI/ML model.

In any embodiment of the present application, two-sided AI/ML model means that two AI/ML models exist in two network entities respectively, and the AI/ML models in the two entities have a certain coupling relationship.

The first communication device is a device that performs AI/ML model monitoring, which may be a UE or a network-side device, and the second communication device is a device where the other AI/ML model corresponding to the first-communication-device-side AI/ML model is located and may be a UE or a network-side device. For example, in case that the first communication device is a UE, the second communication device may be a network-side device, such as a base station, a location management function (LMF), an operation, administration and maintenance (OAM), etc.; in case that the first communication device is a network-side device, the second communication device may be a UE or other network-side devices other than the first communication device.

For example, the AI/ML model is located at a UE side and a network side (the base station is taken as an example), respectively. The UE-side AI/ML model is used for CSI compression, while the network-side AI/ML model is used to perform CSI decompression on a CSI bit stream compressed by the UE-side AI/ML model to restore an uncompressed CSI measurement value. At this time, it is assumed that the AI/ML model is used for CSI feedback at the UE side and the network side. That is, two-side AI/ML models are operating, that is, the two-side AL/ML models are activated. In this case, from the perspective of UE performing model monitoring, the UE is the first communication device, and accordingly, the base station is the second communication device. From the perspective of base station performing model monitoring, the base station is the first communication device, and accordingly, the UE is the second communication device.

For example, the AI/ML model is located at the UE side/base station side and network side (LMF) respectively. The UE-side/base station-side AI/ML model is used to provide intermediate quantities input to the LMF, such as time of arrival (TOA), angle of arrival (AOA), angle of departure (AOD), etc. The AI/ML output results at the UE side/base station side are transmitted to the LMF as inputs of the LMF-side AI/ML model to derive the location (such as two-dimensional location information) of the UE. In this case, from the perspective of UE/base station performing model monitoring, the UE/base station is the first communication device, and accordingly, the LMF is the second communication device. From the perspective of LMF performing model monitoring, the LMF is the first communication device, and accordingly, the UE/base station is the second communication device.

The first communication device may monitor the performance of the AI/ML model, which may refer to monitoring the performance of a first-communication-device-side AI/ML model or a second communication device-side AI/ML model; or monitoring the performance of both a first-communication-device-side AI/ML model and a second communication device-side AI/ML model; or monitoring overall performance of an AI/ML model pair consisting of a first-communication-device-side AI/ML model and a second communication device-side AI/ML model.

In an implementation, joint monitoring may be performed: the first communication device monitors the overall performance of an AI/ML model pair consisting of a first-communication-device-side AI/ML model and a second communication device-side AI/ML model. For example: the AI/ML model is located at both the UE side and the network side, respectively. The overall AI/ML model pair consisting of UE-side and network-side AI/ML models may be monitored by the UE; or the overall AI/ML model pair consisting of UE-side and network-side AI/ML models may be monitored by the network-side device.

In an implementation, separate monitoring may be performed: the first communication device monitors the performance of a first-communication-device-side AI/ML model or a second communication device-side AI/ML model, or the first communication device monitors the performance of both a first-communication-device-side AI/ML model and a second communication device-side AI/ML model. For example: the AI/ML model is located at both the UE side and the network side, respectively. The UE-side AI/ML model may be monitored by the UE, and the network-side AI/ML model may be monitored by the network-side device. The UE-side AI/ML model and the network-side AI/ML model may be monitored by the UE. The UE-side AI/ML model and the network-side AI/ML model may be monitored by the network-side device.

A way in which the first communication device monitors the performance of the AI/ML model is not limited in the present application.

In an implementation, the performance of a one-side AI/ML model or an AI/ML model pair may be evaluated by a "key performance indicator (KPI)", and the KPI may include system throughput, user perceived throughput (UPT), etc.

In an implementation, the performance of a one-side AI/ML model or an AI/ML model pair may be evaluated by "data distribution change", and the data may be model input data or model output data. For example, in case that the distribution characteristics of "data during inference" and "data during model training" have changed greatly, the performance of the model may be relatively poor.

In an implementation, the performance of an AI/ML model pair may be evaluated by "intermediate KPI", and the intermediate KPI may be a squared generalized cosine similarity (SGCS) between a channel restored by the model pair and an ideal channel estimate.

In case that the first communication device monitors that performance of at least one-side AI/ML model or a two-side AI/ML model pair of a two-sided AI/ML model does not meet a model performance requirement, the first communication device may transmit first information to a second communication device.

In any embodiment of the present application, the first communication device monitors that performance of at least one-side AI/ML model or a two-side AI/ML model pair of a two-sided AI/ML model does not meet a model performance requirement, which may refer to monitoring that performance of a first-communication-device-side AI/ML model does not meet the model performance requirement; or performance of a second communication device-side AI/ML model does not meet the model performance requirement; or both performance of a first-communication-device-side AI/ML model and performance of a second communication device-side AI/ML model do not meet the model performance requirement; or performance of the two-side AI/ML model pair corresponding to a first communication device side and a second communication device side does not meet the model performance requirement.

The first information includes information associated with monitoring the two-sided AI/ML model, such as result information associated with monitoring the two-sided AI/ML model, associated indication information of subsequent handling of the model of which monitoring performance does not meet the performance requirement, etc. After receiving the first information, the second communication device may learn the information associated with the model monitoring, and then perform corresponding handling, such as changing the AI/ML model, falling back the AI/ML model to a non-AI/ML-model-based operation mode, indicating the first communication device to change the AI/ML model, indicating the first communication device to fall back the AI/ML model to a non-AI/ML-model-based operation mode, etc., and the specific circumstances are not limited.

It should be noted that in each embodiment of the present application, the change may also be interpreted as switch, activate, deactivate, update, etc.

In the method for AI/ML model monitoring provided in the embodiments of the present application, in case of monitoring that the performance of the at least one-side AI/ML model or the two-side AI/ML model pair of the two-sided AI/ML model does not meet the model performance requirement, the first communication device transmits first information to the second communication device, where the first information includes information associated with monitoring the two-sided AI/ML model. The first communication device and the second communication device may take corresponding actions to ensure the normal use of the two-sided AI/ML model or the normal operation of this function.

In any embodiment of the present application, the first information may include one or more of the following.
(1) First indication information is used to indicate that performance of the at least one-side AI/ML model or the two-side AI/ML model pair of the two-sided AI/ML model does not meet the model performance requirement.

In any embodiment of the present application, the first information transmitted from the first communication device to the second communication device may include the first indication information. The first indication information may be used to indicate that the performance of the at least one-side AI/ML model or the two-side AI/ML model pair of the two-sided AI/ML model does not meet the model performance requirement.

For example, the first indication information may be used to indicate that the performance of the first-communication-device-side AI/ML model does not meet the model performance requirement; or, the first indication information may be used to indicate that the performance of the second communication device-side AI/ML model does not meet the model performance requirement; or, the first indication information may be used to indicate that performances of a first-communication-device-side AI/ML model and a second communication device-side AI/ML model do not meet the model performance requirement; or, the first indication information may be used to indicate that the overall performance of the two-side AI/ML model pair does not meet the model performance requirement.

(2) Second indication information is used to indicate that the at least one-side AI/ML model or the two-side AI/ML model pair of the two-sided AI/ML model needs to be changed.

In any embodiment of the present application, the first information transmitted from the first communication device to the second communication device may include the second indication information. The second indication information may be used to indicate that the at least one-side AI/ML model or the two-side AI/ML model pair of the two-sided AI/ML model needs to be changed.

For example, the second indication information may be used to indicate that the first-communication-device-side AI/ML model needs to be changed; or, the second indication information may be used to indicate that the second communication device-side AI/ML model needs to be changed; or, the second indication information may be used to indicate that a first-communication-device-side AI/ML model and a second communication device-side AI/ML model need to be changed; or, the second indication information may be used to indicate that the two-side AI/ML model pair needs to be changed.

(3) Third indication information is used to indicate that the at least one-side AI/ML model or the two-side AI/ML model pair of the two-sided AI/ML model needs to fall back to a non-AI/ML-model-based operation mode.

In any embodiment of the present application, the first information transmitted from the first communication device to the second communication device may include the third indication information. The third indication information may be used to indicate that the at least one-side AI/ML model or the two-side AI/ML model pair of the two-sided AI/ML model needs to fall back to a non-AI/ML-model-based operation mode.

For example, the third indication information may be used to indicate that the first-communication-device-side AI/ML model needs to fall back to a non-AI/ML-model-based operation mode; or, the third indication information may be used to indicate that the second communication device-side AI/ML model needs to fall back to a non-AI/ML-model-based operation mode; or, the third indication information may be used to indicate that a first-communication-device-side AI/ML model and a second communication device-side AI/ML model need to fall back to a non-AI/ML-model-based operation mode; or, the third indication information may be used to indicate that the two-side AI/ML model pair needs to fall back to a non-AI/ML-model-based operation mode.

(4) Fourth indication information is used to indicate that a first-communication-device-side AI/ML model is changed.

In any embodiment of the present application, in case that the first communication device has changed the first-communication-device-side AI/ML model, the first information transmitted from the first communication device to the second communication device may include the fourth indication information. After receiving the fourth indication information, since the first-communication-device-side AI/ML model is in a one-to-one correspondence with the second communication device-side AI/ML model, the second communication device may change the second communication device-side AI/ML model based on the fourth indication information.

(5) Identity information of a changed first-communication-device-side AI/ML model.

In any embodiment of the present application, in case that the first communication device has changed the first-communication-device-side AI/ML model, the first information transmitted from the first communication device to the second communication device may include the identity information of a changed first-communication-device-side AI/ML model. After the second communication device receives the identity information of the changed first-communication-device-side AI/ML model, since the first-communication-device-side AI/ML model is in a one-to-one correspondence with the second communication device-side AI/ML model, the second communication device may change the second communication device-side AI/ML model based on the identity information.

(6) Identity information of a second communication device-side AI/ML model corresponding to a changed first-communication-device-side AI/ML model.

In any embodiment of the present application, in case that the first communication device has changed the first-communication-device-side AI/ML model, the first information transmitted from the first communication device to the second communication device may include identity information of a second communication device-side AI/ML model corresponding to a changed first-communication-device-side AI/ML model. After receiving the corresponding identity information of the second communication device-side AI/ML model, the second communication device may change the second communication device-side AI/ML model based on the identity information.

(7) Fifth indication information is used to indicate that a first-communication-device-side AI/ML model fell back to a non-AI/ML-model-based operation mode.

In any embodiment of the present application, in case that the first-communication-device-side AI/ML model fell back to the non-AI/ML-model-based operation mode, the first information transmitted from the first communication device to the second communication device may include the fifth indication information. After receiving the fifth indication information, the second communication device may fall back the second communication device-side AI/ML model to the non-AI/ML-model-based operation mode.

In any embodiment of the present application, the method may further include:
changing a first-communication-device-side AI/ML model or falling back a first-communication-device-side AI/ML model to a non-AI/ML-model-based operation mode.

In any embodiment of the present application, in case of monitoring that the performance of the at least one-side AI/ML model or the two-side AI/ML model pair of the two-sided AI/ML model does not meet the model performance requirement, the first communication device may actively change the first-communication-device-side AI/ML model or fall back the first-communication-device-side AI/ML model to the non-AI/ML-model-based operation mode. In any embodiment of the present application, the first communication device may transmit the first information to the second communication device to inform the second communication device of the information associated with the model monitoring, and then change the first-communication-device-side AI/ML model or fall back the first-communication-device-side AI/ML model to the non-AI/ML-model-based operation mode based on an indication from the second communication device.

In any embodiment of the present application, a changed first-communication-device-side AI/ML model may be determined based on one or more of the following.
(1) A priority order of AI/ML models.
   For example, a priority order may be assigned for AI/ML models based on the generalization performance of each AI/ML model and a specific scenario applicable to each AI/ML model. For example, a priority order of models 1 to 5 may be model1, model3, model4, model5, model2. In case that the currently used AI/ML model model1 needs to be changed, the AI/ML model may be changed to model3 first.
(2) Mapping information between an AI/ML model and an applicable scenario.
   For example, the AI/ML model may be associated with the applicable scenario based on an applicable scenario for each AI/ML model to obtain the mapping relationship between the AI/ML model and the applicable scenario. The association way may be to associate through the difference of one or some parameter values in each scenario. That is, the AI/ML model may be associated with a parameter value of one or some parameters, that is, the AI/ML model is associated with the applicable scenario. The changed AI/ML model may then be the most suitable AI/ML model selected based on the current scenario.
(3) Randomly selecting an AI/ML model.
   For example, the changed AI/ML model may be any AI/ML model randomly selected other than the currently used AI/ML model.

In any embodiment of the present application, changing the first-communication-device-side AI/ML model or falling back the first-communication-device-side AI/ML model to the non-AI/ML-model-based operation mode includes:
based on second information transmitted from the second communication device, changing the first-communication-device-side AI/ML model or falling back the first-communication-device-side AI/ML model to the non-AI/ML-model-based operation mode.

In any embodiment of the present application, after the first communication device transmits the first information to the second communication device, the second communication device may transmit the second information to the first communication device.

After receiving the second information transmitted from the second communication device, the first communication device may change the first-communication-device-side AI/ML model or fall back the first-communication-device-side AI/ML model to the non-AI/ML-model-based operation mode based on the second information.

The second information may include one or more of the following.
(1) Sixth indication information is used to indicate the first communication device to change a first-communication-device-side AI/ML model or fall back a first-communication-device-side AI/ML model to a non-AI/ML-model-based operation mode.
   In any embodiment of the present application, the second information transmitted from the second communication device to the first communication device may include the sixth indication information. The sixth indication information may be used to indicate the first communication device to change the first-communication-device-side AI/ML model, or to indicate the first communication device to fall back the first-communication-device-side AI/ML model to the non-AI/ML-model-based operation mode. After receiving the sixth indication information, the first communication device may change the AI/ML model or fall back the first-communication-device-side AI/ML model to a non-AI/ML-model-based operation mode based on the sixth indication information.
(2) Identity information of a changed second communication device-side AI/ML model.
   In any embodiment of the present application, in case that the second communication device has changed the second communication device-side AI/ML model, the second information transmitted from the second communication device to the first communication device may include the identity information of a changed second communication device-side AI/ML model. After the first communication device receives the identity information of the changed second communication device-side AI/ML model, since the second communication device-side AI/ML model is in a one-to-one correspondence with the first-communication-device-side AI/ML model, the first communication device may change the first-communication-device-side AI/ML model based on the identity information.
(3) Identity information of a first-communication-device-side AI/ML model corresponding to a changed second communication device-side AI/ML model.
   In any embodiment of the present application, in case that the second communication device has changed the second communication device-side AI/ML model, the second information transmitted from the second communication device to the first communication device may include identity information of the first-communication-device-side AI/ML model corresponding to a changed second communication device-side AI/ML model. After receiving the corresponding identity information of the first-communication-device-side AI/ML model, the first communication device may change the first-communication-device-side AI/ML model based on the identity information.

In any embodiment of the present application, the method may further include: receiving monitoring configuration information.

In any embodiment of the present application, before monitoring the performance of the AI/ML model, the first communication device may receive monitoring configuration information transmitted from the second communication device or a third-party device.

The monitoring configuration information may include one or more of the following.

### (1) Identity information of an AI/ML model that needs to be monitored.

In any embodiment of the present application, the identity information of the AI/ML model that needs to be monitored may be identity information of some models or identity information of all models. That is, the first communication device may be configured to monitor some models or all models.

### (2) A monitoring cycle of an AI/ML model;

In any embodiment of the present application, the monitoring cycle of the AI/ML model may be a global variable or a variable for a certain model. A model monitoring cycle may be configured per model, that is, how often the first communication device monitors the model; or a common monitoring cycle may be configured for all models, that is, how often the first communication device monitors all models. The monitoring cycle of the AI/ML model may also be how often the first communication device monitors a currently activated model (regardless of which specific model).

### (3) A monitoring duration of an AI/ML model.

In any embodiment of the present application, the monitoring duration of the AI/ML model may be a global variable or a variable for a certain model. A model monitoring duration may be configured per model, that is, a duration for which the first communication device monitors the model; or a common monitoring duration may be configured for all models, that is, a duration for which the first communication device monitors all models. The monitoring duration of the AI/ML model may also be a duration for which the first communication device monitors a currently activated model (regardless of which specific model).

### (4) A monitoring metric of an AI/ML model.

In any embodiment of the present application, the monitoring metric of the AI/ML model may be a global variable or a variable for a certain model. A monitoring metric may be configured per model, or a same monitoring metric may be configured for all models. For example, for a spatial-frequency domain CSI compression sub use case, the monitoring metric may be an SGCS, a throughput, a hypothetical block error rate (BLER), negative acknowledgement (NACK)/acknowledgement (ACK), a block error rate (BLER), etc.

### (5) A monitoring metric threshold of an AI/ML model.

In any embodiment of the present application, the monitoring metric threshold of the AI/ML model may be a global variable or a variable for a certain model. A monitoring metric threshold may be configured per model, or a same monitoring metric threshold may be configured for all models. For example, for spatial-frequency domain CSI compression, the monitoring metric may be SGCS, throughput, hypothetical BLER, NACK/ACK, BLER, etc., and the monitoring metric threshold may be a threshold for these monitoring metrics.

### (6) Mapping information of a model pair between a first-communication-device-side AI/ML model and a second communication device-side AI/ML model.

In any embodiment of the present application, the mapping information of a model pair between the first-communication-device-side AI/ML model and the second communication device-side AI/ML model may include a mapping relationship that exists in a model pair between a first-communication-device-side AI/ML model and a second communication device-side AI/ML model.

For example: 5 AI/ML models exist at the first communication device side and the second communication device side, respectively. Indexes of first-communication-device-side models are model1, model2, model3, model4, model5, and indexes of second communication device-side models are model6, model7, model8, model9, model10. The mapping relationship of the model pair between a first-communication-device-side model and a second communication device-side model may be that a first-communication-device-side model1 is used by matching with a second communication device-side model6, a first-communication-device-side model2 is used by matching with a second communication device-side model7, a first-communication-device-side model3 is used by matching with a second communication device-side model8, a first-communication-device-side model4 is used by matching with a second communication device-side model9, and a first-communication-device-side model5 is used by matching with a second communication device-side model10.

### (7) Priority information of an AI/ML model.

In any embodiment of the present application, a priority may be assigned to an AI/ML model based on the generalization performance of each AI/ML model and the specific scenarios applicable to each AI/ML model and transmitted to the first communication device. For example, the priority of models 1 to 5 may be model1, model3, model4, model5, model2.

### (8) Mapping information between an AI/ML model and an applicable scenario.

In any embodiment of the present application, the AI/ML model may be associated with the applicable scenario based on the applicable scenario of each AI/ML model to obtain the mapping information between the AI/ML model and the applicable scenario, and then the mapping information between the AI/ML model and the applicable scenario may be transmitted to the first communication device. For example, the association way may be to associate through the difference of one or some parameter values in each scenario. That is, the AI/ML model may be associated with a parameter value of one or some parameters, that is, the AI/ML model is associated with the applicable scenario.

In any embodiment of the present application, the identity information of the AI/ML model described in any embodiment of the present application may include one or more of the following.
(1) A model identity of an AI/ML model. For example: 5 AI/ML models exist at the first communication device side and the second communication device side, respectively. Identities of first-communication-device-side AI/ML models are 1, 2, 3, 4, and 5, respectively, and the identities of second communication device-side AI/ML models are 6, 7, 8, 9, and 10, respectively. If the identity of model is 1, the identity of the model corresponds to a first-communication-device-side model 1.
(2) A model configuration identity of an AI/ML model. For example: 5 AI/ML models exist at the first communication device side and the second communication device side, respectively, and each model has a set of configuration information. The configuration identities of first-communication-device-side models may be configured as 1, 2, 3, 4, and 5, respectively, and the configuration identities of second communication device-side models may be configured as 6, 7, 8, 9, and 10, respectively. If the model configuration identity is 1, the model configuration identity corresponds to a first-communication-device-side model with the model configuration identity of 1. This is an implicit way.
(3) A parameter value of an AI/ML model. If different AI/ML models have different parameter values, the corresponding AI/ML model may be determined based on the parameter values of the AI/ML model.
(4) Input and output information of an AI/ML model. Different AI/ML models have different input and output information. For example, the corresponding AI/ML model may be determined based on the different quantities of input and output beams.

FIG. 2 is a second schematic flowchart of a method for artificial intelligence (AI)/machine learning (ML) monitoring according to an embodiment of the present application. As shown in FIG. 2, the method is performed by a second communication device and includes the following steps.

Step 200: receiving first information transmitted from a first communication device, where the first information includes information associated with monitoring a two-sided AI/ML model.

In any embodiment of the present application, two-sided AI/ML model means that two AI/ML models exist in two network entities respectively, and the AI/ML models in the two entities have a certain coupling relationship.

The first communication device is a device that performs AI/ML model monitoring, which may be a UE or a network-side device, and the second communication device is a device where the other AI/ML model corresponding to the first-communication-device-side AI/ML model is located and may be a UE or a network-side device. For example, in case that the first communication device is a UE, the second communication device may be a network-side device, such as a base station, a location management function (LMF), an operation, administration and maintenance (OAM), etc.; in case that the first communication device is a network-side device, the second communication device may be a UE or other network-side devices other than the first communication device.

For example, an AI/ML model is located at a UE side and a network side (the base station is taken as an example), respectively. The UE-side AI/ML model is used for CSI compression, while the network-side AI/ML model is used to perform CSI decompression on a CSI bit stream compressed by the UE-side AI/ML model to restore an uncompressed CSI measurement value. At this time, it is assumed that the AI/ML model is used for CSI feedback at the UE side and the network side. That is, two-side AI/ML models are operating, that is, the two-side AL/ML models are activated. In this case, from the perspective of UE performing model monitoring, the UE is the first communication device, and accordingly, the base station is the second communication device. From the perspective of base station performing model monitoring, the base station is the first communication device, and accordingly, the UE is the second communication device.

For example, an AI/ML model is located at the UE side/base station side and network side (LMF) respectively. The UE-side/base station-side AI/ML model is used to provide intermediate quantities input to the LMF, such as time of arrival (TOA), angle of arrival (AOA), angle of departure (AOD), etc. The AI/ML output results at the UE side/base station side are transmitted to the LMF as inputs of the LMF-side AI/ML model to derive the location (such as two-dimensional location information) of the UE. In this case, from the perspective of UE/base station performing model monitoring, the UE/base station is the first communication device, and accordingly, the LMF is the second communication device. From the perspective of LMF performing model monitoring, the LMF is the first communication device, and accordingly, the UE/base station is the second communication device.

The first communication device may monitor the performance of the AI/ML model, which may refer to monitoring the performance of a first-communication-device-side AI/ML model or a second communication device-side AI/ML model; or monitoring the performance of both a first-communication-device-side AI/ML model and a second communication device-side AI/ML model; or monitoring overall performance of an AI/ML model pair consisting of a first-communication-device-side AI/ML model and a second communication device-side AI/ML model.

In an implementation, joint monitoring may be performed: the first communication device monitors the overall performance of an AI/ML model pair consisting of a first-communication-device-side AI/ML model and a second communication device-side AI/ML model. For example: the AI/ML model is located at both the UE side and the network side, respectively. The overall AI/ML model pair consisting of UE-side and network-side AI/ML models may be monitored by the UE; or the overall AI/ML model pair consisting of UE-side and network-side AI/ML models may be monitored by the network-side device.

In an implementation, separate monitoring may be performed: the first communication device monitors the performance of a first-communication-device-side AI/ML model or a second communication device-side AI/ML model, or the first communication device monitors the performance of both a first-communication-device-side AI/ML model and a second communication device-side AI/ML model. For example: the AI/ML model is located at both the UE side and the network side, respectively. The UE-side AI/ML model may be monitored by the UE, and the network-side AI/ML model may be monitored by the network-side device. The UE-side AI/ML model and the network-side AI/ML model may be monitored by the UE. The UE-side AI/ML model and the network-side AI/ML model may be monitored by the network-side device.

A way in which the first communication device monitors the performance of the AI/ML model is not limited in the present application.

In an implementation, the performance of a one-side AI/ML model or an AI/ML model pair may be evaluated by a "key performance indicator (KPI)", and the KPI may include system throughput, user perceived throughput (UPT), etc.

In an implementation, the performance of a one-side AI/ML model or an AI/ML model pair may be evaluated by "data distribution change", and the data may be model input data or model output data. For example, in case that the distribution characteristics of "data during inference" and "data during model training" have changed greatly, the performance of the model may be relatively poor.

In an implementation, the performance of an AI/ML model pair may be evaluated by "intermediate KPI", and the intermediate KPI may be a squared generalized cosine similarity (SGCS) between a channel restored by the model pair and an ideal channel estimate.

In case that the first communication device monitors that performance of at least one-side AI/ML model or a two-side AI/ML model pair of a two-sided AI/ML model does not meet a model performance requirement, the first communication device may transmit first information to a second communication device.

In any embodiment of the present application, the first communication device monitors that performance of at least one-side AI/ML model or a two-side AI/ML model pair of a two-sided AI/ML model does not meet a model performance requirement, which may refer to monitoring that performance of a first-communication-device-side AI/ML model does not meet the model performance requirement; or performance of a second communication device-side AI/ML model does not meet the model performance requirement; or both performance of a first-communication-device-side AI/ML model and performance of a second communication device-side AI/ML model do not meet the model performance requirement; or performance of the two-side AI/ML model pair corresponding to a first communication device side and a second communication device side does not meet the model performance requirement.

The first information includes information associated with monitoring the two-sided AI/ML model, such as result information associated with monitoring the two-sided AI/ML model, associated indication information of subsequent handling of the model of which monitoring performance does not meet the performance requirement, etc. After receiving the first information, the second communication device may learn the information associated with the model monitoring, and then perform corresponding handling, such as changing the AI/ML model, falling back the AI/ML model to a non-AI/ML-model-based operation mode, indicating the first communication device to change the AI/ML model, indicating the first communication device to fall back the AI/ML model to a non-AI/ML-model-based operation mode, etc., and the specific circumstances are not limited.

In the method for AI/ML model monitoring provided in the embodiments of the present application, the second communication device receives the first information transmitted from the first communication device, where the first information includes information associated with monitoring the two-sided AI/ML model. The first communication device and the second communication device may take corresponding actions to ensure the normal use of the two-sided AI/ML model or the normal operation of this function.

In any embodiment of the present application, the first information may include one or more of the following:
(1) First indication information is used to indicate that performance of the at least one-side AI/ML model or the two-side AI/ML model pair of the two-sided AI/ML model does not meet the model performance requirement.

In any embodiment of the present application, the first information received by the second communication device transmitted from the first communication device may include the first indication information. The first indication information may be used to indicate that the performance of the at least one-side AI/ML model or the two-side AI/ML model pair of the two-sided AI/ML model does not meet the model performance requirement.

For example, the first indication information may be used to indicate that the performance of the first-communication-device-side AI/ML model does not meet the model performance requirement; or, the first indication information may be used to indicate that the performance of the second communication device-side AI/ML model does not meet the model performance requirement; or, the first indication information may be used to indicate that performances of a first-communication-device-side AI/ML model and a second communication device-side AI/ML model do not meet the model performance requirement; or, the first indication information may be used to indicate that the overall performance of the two-side AI/ML model pair does not meet the model performance requirement.

(2) Second indication information is used to indicate that the at least one-side AI/ML model or the two-side AI/ML model pair of the two-sided AI/ML model needs to be changed.

In any embodiment of the present application, the first information received by the second communication device transmitted from the first communication device may include the second indication information. The second indication information may be used to indicate that the at least one-side AI/ML model or the two-side AI/ML model pair of the two-sided AI/ML model needs to be changed.

For example, the second indication information may be used to indicate that the first-communication-device-side AI/ML model needs to be changed; or, the second indication information may be used to indicate that the second communication device-side AI/ML model needs to be changed; or, the second indication information may be used to indicate that a first-communication-device-side AI/ML model and a second communication device-side AI/ML model need to be changed; or, the second indication information may be used to indicate that the two-side AI/ML model pair needs to be changed.

(3) Third indication information is used to indicate that the at least one-side AI/ML model or the two-side AI/ML model pair of the two-sided AI/ML model needs to fall back to a non-AI/ML-model-based operation mode.

In any embodiment of the present application, the first information received by the second communication device transmitted from the first communication device may include the third indication information. The third indication information may be used to indicate that the at least one-side AI/ML model or the two-side AI/ML model pair of the two-sided AI/ML model needs to fall back to a non-AI/ML-model-based operation mode.

For example, the third indication information may be used to indicate that the first-communication-device-side AI/ML model needs to fall back to a non-AI/ML-model-based operation mode; or, the third indication information may be used to indicate that the second communication device-side AI/ML model needs to fall back to a non-AI/ML-model-based operation mode; or, the third indication information may be used to indicate that a first-communication-device-side AI/ML model and a second communication device-side AI/ML model need to fall back to a non-AI/ML-model-based operation mode; or, the third indication information may be used to indicate that the two-side AI/ML model pair needs to fall back to a non-AI/ML-model-based operation mode.

(4) Fourth indication information is used to indicate that a first-communication-device-side AI/ML model is changed.

In any embodiment of the present application, in case that the first communication device has changed the first-communication-device-side AI/ML model, the first information received by the second communication device transmitted from the first communication device may include the fourth indication information. After receiving the fourth indication information, since the first-communication-device-side AI/ML model is in a one-to-one correspondence with the second communication device-side AI/ML model, the second communication device may change the second communication device-side AI/ML model based on the fourth indication information.

(5) Identity information of a changed first-communication-device-side AI/ML model.

In any embodiment of the present application, in case that the first communication device has changed the first-communication-device-side AI/ML model, the first information received by the second communication device transmitted from the first communication device may include the identity information of a changed first-communication-device-side AI/ML model. After the second communication device receives the identity information of the changed first-communication-device-side AI/ML model, since the first-communication-device-side AI/ML model is in a one-to-one correspondence with the second communication device-side AI/ML model, the second communication device may change the second communication device-side AI/ML model based on the identity information.

(6) Identity information of a second communication device-side AI/ML model corresponding to a changed first-communication-device-side AI/ML model.

In any embodiment of the present application, in case that the first communication device has changed the first-communication-device-side AI/ML model, the first information received by the second communication device transmitted from the first communication device may include identity information of a second communication device-side AI/ML model corresponding to a changed first-communication-device-side AI/ML model. After receiving the corresponding identity information of the second communication device-side AI/ML model, the second communication device may change the second communication device-side AI/ML model based on the identity information.

(7) Fifth indication information is used to indicate that a first-communication-device-side AI/ML model fell back to a non-AI/ML-model-based operation mode.

In any embodiment of the present application, in case that the first-communication-device-side AI/ML model fell back to the non-AI/ML-model-based operation mode, the first information received by the second communication device transmitted from the first communication device may include the fifth indication information. After receiving the fifth indication information, the second communication device may fall back the second communication device-side AI/ML model to the non-AI/ML-model-based operation mode.

In any embodiment of the present application, after receiving first information transmitted from the first communication device, the method further includes:
transmitting second information to the first communication device.

In any embodiment of the present application, after the second communication device receives the first information transmitted from the first communication device, the second communication device may transmit the second information to the first communication device.

The second information may include one or more of the following.
(1) Sixth indication information is used to indicate the first communication device to change a first-communication-device-side AI/ML model or fall back a first-communication-device-side AI/ML model to a non-AI/ML-model-based operation mode.
   In any embodiment of the present application, the second information transmitted from the second communication device to the first communication device may include the sixth indication information. The sixth indication information may be used to indicate the first communication device to change the first-communication-device-side AI/ML model, or to indicate the first communication device to fall back the first-communication-device-side AI/ML model to the non-AI/ML-model-based operation mode. After receiving the sixth indication information, the first communication device may change the AI/ML model or fall back the first-communication-device-side AI/ML model to a non-AI/ML-model-based operation mode based on the sixth indication information.
(2) Identity information of a changed second communication device-side AI/ML model.
   In any embodiment of the present application, in case that the second communication device has changed the second communication device-side AI/ML model, the second information transmitted from the second communication device to the first communication device may include the identity information of a changed second communication device-side AI/ML model. After the first communication device receives the identity information of the changed second communication device-side AI/ML model, since the second communication device-side AI/ML model is in a one-to-one correspondence with the first-communication-device-side AI/ML model, the first communication device may change the first-communication-device-side AI/ML model based on the identity information.
(3) Identity information of a first-communication-device-side AI/ML model corresponding to a changed second communication device-side AI/ML model.

In any embodiment of the present application, in case that the second communication device has changed the second communication device-side AI/ML model, the second information transmitted from the second communication device to the first communication device may include identity information of the first-communication-device-side AI/ML model corresponding to a changed second communication device-side AI/ML model. After receiving the corresponding identity information of the first-communication-device-side AI/ML model, the first communication device may change the first-communication-device-side AI/ML model based on the identity information.

The methods provided in the embodiments of the present application are based on the same concept, the implementation of each method may refer to each other, and the details are not repeated here.

The methods provided in the above embodiments of the present application are illustrated below by examples under specific application scenarios.

Embodiment 1-1: joint monitoring and joint changing. Performance of an entire model pair is monitored by a user equipment (UE).

A spatial-frequency domain CSI compression sub use case is taken as an example (the method is not limited to this scenario).

Step 1: an AI/ML model is located at a UE side and a network side, respectively. The UE-side AI/ML model is used for CSI compression, while the network-side AI/ML model is used to perform CSI decompression on a CSI bit stream compressed by the UE-side AI/ML model to restore an uncompressed CSI measurement value. At this time, it is assumed that the AI/ML model is used for CSI feedback at the UE side and the network side. That is, two-side AI/ML models are operating, that is, the two-side AL/ML models are activated.

For example: 5 AI/ML models exist at the UE side and the network side. The UE-side models are indexed as model1, model2, model3, model4, and model5 and a model currently being used at the UE side is model1. The network-side models are indexed as model6, model7, model8, model9, and model10, and a model currently being used is model6. The relationship between the model matching at the UE side and the network side is that a UE-side modell is used by matching with a network-side model6, a UE-side model2 is used by matching with a network-side model7, a UE-side model3 is used by matching with a network-side model8, a UE-side model4 is used by matching with a network-side model9, and a UE-side model5 is used by matching with a network-side model10.

Step 2: since the UE monitors the overall performance of a two-sided AI/ML model, the network may configure some pieces of configuration information associated with monitoring for the UE, as follows.

Identity information associated with models that need to be monitored, such as modell to model5. In case that model1 is monitored, it is equivalent to monitoring joint performance of modell and model6; the network may configure the UE to monitor some or all models.

Model monitoring cycle: this is a global variable or a per model variable; the network may configure a model monitoring cycle per model, that is, how often the UE monitors the model. The network may also configure a common monitoring cycle for all models, that is, how often the UE monitors all models. The model monitoring cycle may also be how often the UE monitors a currently activated model (regardless of which specific model).

Model monitoring duration: this is a global variable or a per model variable; the network may configure a model monitoring duration per model, that is, a duration for which the UE monitors the model. The network may also configure a common monitoring duration for all models, that is, a duration for which the UE monitors all models. The model monitoring duration may also be a duration for which the UE monitors a currently activated model (regardless of which specific model).

Monitoring metric/threshold: this is a global variable or a per model variable. The network may configure a monitoring metric/threshold per model, or a same monitoring metric/threshold may be configured for all models. For example, for a spatial-frequency domain CSI compression sub use case, the monitoring metric may be SGCS, throughput, hypothetical BLER, NACK/ACK, BLER, etc., and the threshold may be a threshold for these monitoring metrics.

Mapping information of a model pair between the UE side and the network side, such as the model pair mapping relationship in step 1 above.

Priority information of models: the network may assign a priority for a model based on generalization performance of each model and specific scenarios applicable to each model and transmit the priority to the UE. For example, the priority of the above models may be modell, model3, model4, model5, model2.

Mapping information between a model and applicable scenario: the network may associate a model with an applicable scenario based on an applicable scenario for each model and transmit the mapping relationship to the UE. The association way may be to associate through the difference of one or some parameter values in each scenario. That is, the model may be associated with a parameter value of one or some parameters, that is, the model is associated with the applicable scenario.

Step 3: the UE receives the configuration information transmitted from the network and starts to monitor the model. Methods for model monitoring include one or more of the following (not limited to the following methods).

Method 1: evaluating is performed through "intermediate key performance indicator (KPI)". In this sub use case, the intermediate KPI may be squared generalized cosine similarity (SGCS) between a restored channel and an ideal channel estimate.

Method 2: evaluating is performed through "system performance KPI". The system performance KPI includes throughput, user perceived throughput (UPT), etc.

Method 3: evaluating is performed through "data distribution change". The data may be model input data or model output data. For example, if the distribution characteristics of "data during inference" and "data during model training" have changed greatly, then the performance of the model may be relatively poor.

Step 4: when the UE monitors that the overall performance of the model is poor (such as the performance of the current modell and model6 is poor), the behaviors of the UE side and the network side are as follows.

UE side behaviors include one or more of the following:
the UE transmits indication information to the network side to notify that the overall performance of the AI/ML model is poor/needs to be changed/needs to fall back to a non-AI/ML-model-based operation mode;
the UE changes/switches to an AI/ML model with a higher priority based on an AI/ML model priority configured by the network, or deactivates the currently used AI/ML model and activates another AI/ML model with a higher priority;
the UE falls back to a non-AI/ML-model-based operation mode;
the UE selects an AI/ML model based on the mapping relationship between the model and the applicable scenario;
the UE randomly selects an AI/ML model;
the UE transmits one piece of indication information to indicate that the UE-side AI/ML model is changed or the network-side model needs to be changed;
the UE transmits identity information associated with the changed UE-side AI/ML model to the network, such as model identity information;
the UE transmits identity information associated with a network-side AI/ML model corresponding to the changed UE-side AI/ML model, such as model identity information; or
the UE transmits one piece of indication information to indicate that the UE side fell back to a non-AI/ML-model-based operation mode or that the network-side model needs to fall back to a non-AI/ML-model-based operation mode.

Network side behaviors include one or more of the following:
the network transmits one piece of indication information to the UE to indicate the UE to change/switch/activate/deactivate a model;
the network transmits identity information associated with the changed UE-side model to the UE, such as model identity information;
the network transmits identity information associated with the changed network-side model to the UE, such as model identity information;
the network transmits one piece of indication information to the UE to indicate the UE to fall back to a non-AI/ML-model-based operation mode;
the network falls back the network side to a non-AI/ML-model-based operation mode; or
the network changes/switch/activates/deactivates the network-side model.

Example 1: in case that the UE monitors that the model performance of model1 and model6 is poor, the UE transmits one piece of indication information to the network side. After receiving this indication information, the network side changes a network-side AI/ML model from model6 to model8, and transmits the model identity of the UE-side AI/ML model corresponding to model8, that is, model3. The identity information of model3 may be 3. When the UE receives the identity of model3 transmitted from the network side, that is, 3, the UE changes the UE-side AI/ML model from modell to model3 to complete the matching between the UE-side model and the network-side model, and the model used meets the model performance requirement.

Example 2: in case that the UE monitors that the model performance of model1 and model6 is poor, the UE selects a model with a higher priority, such as model3, based on the model priority information transmitted from the network, and changes the UE-side AI/ML model to model3. The UE transmits the identity information of model3 to the network, and the identity information of model3 may be 3, and notifies the network that the UE-side model is changed to model3. When the network side receives the identity information, that is, 3 of model3 transmitted from the UE, based on the mapping relationship between the UE-side model and the network-side model, the network changes the network-side AI/ML model to model8 to complete the matching between the UE-side model and the network-side model, and the model used meets the model performance requirement.

Example 3: in case that the UE monitors that the performance of model1 and model6 is poor, the UE falls back the UE-side AI/ML model to a non-AI/ML-model-based operation mode. The UE transmits one piece of indication information to the network to indicate that the UE side fell back to a non-AI/ML-model-based operation mode. After receiving this indication information, the network falls back the network side from the AI/ML model to a non-AI/ML-model-based operation mode.

Embodiment 1-2: joint monitoring and joint changing. Performance of an entire model pair is monitored by a network side.

A spatial-frequency domain CSI compression sub use case is taken as an example (the method is not limited to this scenario).

Step 1: model allocation on both sides in embodiment 1-1 is taken as an example, that is, 5 models of model1, model2, model3, model4, and model5 exist at the UE side, and 5 models of model6, model7, model8, model9, and model10 exist at the network side.

Step 2: since the network side monitors the overall model performance, the network may not configure configuration information associated with the model monitoring to the UE. In any embodiment of the present application, the network may also transmit configuration information such as model priority, a mapping relationship between the UE-side model and the network-side model to the UE (such as the configuration information in step 2 of embodiment 1-1), and the UE may perform autonomous model selection and update.

Step 3: the network side monitors the overall model performance, and the monitoring method are the same as the methods in embodiment 1-1.

Step 4: when the network side monitors that the overall model performance is poor, the network side and UE side behaviors are as follows:

Network side behaviors include one or more of the following:
the network changes/switch/activates/deactivates a network-side AI/ML model;
the network falls back the network side to a non-AI/ML-model-based operation mode; or
the network transmits one piece of indication information to the UE to indicate that the UE-side AI/ML model is changed or the UE-side model needs to be changed;
the network transmits one piece of indication information to the UE to indicate that the network side fell back to a non-AI/ML-model-based operation mode or that the UE side needs to fall back to a non-AI/ML-model-based operation mode;
the network transmits identity information associated with a changed network-side AI/ML model;
the network transmits identity information associated with a changed UE-side AI/ML model; or
the network transmits one piece of indication information to the UE to indicate that the overall performance of the AI/ML model is poor/needs to be changed/needs to fall back to a non-AI/ML-model-based operation mode.

Corresponding UE side behaviors include one or more of the following:
the UE changes/switches/activates/deactivates the UE-side AI/ML model based on an indication from the network; or
the UE falls back the UE-side AI/ML model to a non-AI/ML-model-based operation mode based on an indication from the network.

### Examples are as follows.

Example 1: in case that the network side monitors that overall model performance is poor, that is, the model performance of modell and model6 is poor, the network side transmits one piece of indication information to the UE to notify the UE that the overall model performance is poor. After receiving this indication information, the UE selects a model with a higher model priority, such as model3, based on the model priority configured by the network, and changes the UE-side model to model3. The UE transmits the model identity information of model3 to the network. The identity information of model3 may be 3, indicating to the network that the UE has changed the UE-side model to model3. After receiving the identity information of model3, that is, 3, the network changes the network-side model to model8 based on the mapping relationship between the UE-side model and the network-side model. Thus, the matching between the UE-side model and the network-side model is completed, and the model used meets the model performance requirement.

Example 2: in case that the network side monitors that the overall model performance is poor, that is, the model performance of modell and model6 is poor, the network changes the network-side model to model8, and transmits the identity information of the UE-side model model3 matched with model8 to the UE. The identity information of model3 may be 3. The network notifies the UE to change the UE-side model to model3. After receiving the identity information of model3, that is, 3, the UE changes the UE-side model to model3. Thus, the matching between the UE-side model and the network-side model is completed, and the model used meets the model performance requirement.

Example 3: in case that the network side monitors that the overall model performance is poor, that is, the model performance of modell and model6 is poor, the network falls back the network-side model to a non-AI/ML-model-based operation mode. The network transmits one piece of indication information to the UE, notifying the UE to fall back the UE-side model to a non-AI/ML-model-based operation mode. After receiving this indication information, the UE falls back the UE-side model to a non-AI/ML-model-based operation mode.

Embodiment 2-1: separate monitoring and joint changing. A user equipment (UE) monitors a UE-side model, and a network monitors a network-side model.

A positioning accuracy use case is taken as an example (this method is not limited to this scenario).

Step 1: an AI/ML model is located at a UE side/base station side and a network side (LMF) respectively. The UE-side/base station-side AI/ML model is used to provide intermediate quantities input to the LMF, such as time of arrival (TOA), angle of arrival (AOA), angle of departure (AOD), etc. The AI/ML output results at the UE side/base station side are transmitted to the LMF as inputs of the LMF-side AI/ML model to derive the location (such as two-dimensional location information) of the UE. The UE-side/base station-side model and the LMF side model may be monitored separately and then changed jointly.

For example: 6 AI/ML models exist at the UE side/base station side and the LMF side, and indexes of the UE-side//base station-side models are model1, model1, model3, model4, model5, and model6. The model currently being used at the UE side/base station side is model1. Indexes of LMF-side models are model7, model8, model9, model10, model1 1, and model12. The model currently being used is model7. The relationship between the UE-side/base station-side model and the LMF-side model is that a UE-side/base station-side model 1 is used by matching with an LMF-side model 7, a UE-side/base station-side model 2 is used by matching with an LMF-side model 8, a UE-side/base station-side model 3 is used by matching with an LMF-side model 9, a UE-side/base station-side model 4 is used by matching with an LMF-side model 10, a UE-side/base station-side model 5 is used by matching with an LMF-side model 11, and a UE-side/base station-side model 6 is used by matching with an LMF-side model 12. UE-side models and LMF-side models are taken as an example for explanation.

Step 2: the base station and/or the LMF may configure configuration information associated with monitoring for the UE. The specific configuration information is the same as the configuration information in step 2 of embodiment 1-1. If it is configured by the LMF, LMF may transmit the configuration information directly to the UE or indirectly to the UE (relayed through the base station).

Step 3: a monitoring metric/monitoring method used by the UE and the LMF for model monitoring includes one or more of the following (not limited to the following methods).

Method 1: evaluating is performed through "system performance KPI", the system performance KPI may include, for example, throughput, UPT, final positioning accuracy error, etc.

Method 2: evaluating is performed through "data distribution change". The data may be model input data or model output data. For example, if the distribution characteristics of "data during inference" and "data during model training" have changed greatly, then the performance of the model may be relatively poor.

Step 4: the UE monitors that the performance of a UE-side model is poor and/or the LMF monitors that performance of an LMF-side model is poor, as follows.

In case that UE monitors that the performance of the UE-side model is poor:
possible UE behaviors and LMF behaviors are the same as the UE behaviors and network behaviors in step 4 of embodiment 1-1, and specific examples are as follows.

Example 1: in case that the UE monitors that the performance of the UE-side model is poor, the UE transmits one piece of indication information to the base station/LMF, indicating that the performance of the UE-side model is poor or the UE-side model needs to be changed. In case that the base station/LMF receives this indication information, the LMF changes the LMF-side model to model10, and the base station/LMF transmits identity information of the UE-side model corresponding to the LMF-side model model10, that is, model4, and the identity information of model4 may be 4. After receiving the identity information of model4, that is, 4, the UE changes the UE-side model from modell to model4. Thus, the matching between the UE-side model and the LMF-side model is completed, and the model used meets the model performance requirement. Interaction information involved in this procedure may be direct interaction between the UE and the LMF, or the UE and the LMF may be relayed through the base station, or it may be interaction between the UE and the base station.

Example 2: in case that the UE monitors that the performance of the UE-side model is poor, the UE selects a UE-side model to change based on the priority information configured by the base station/LMF. If the priority of the UE-side models is model1, model5, model6, model2, model3, model4, the UE then changes the UE-side model to model5. The UE transmits the identity information of the LMF-side model corresponding to model5 to the LMF, that is, model11. The identity information of model1 1 may be 11. In case that the LMF receives this identity information, that is, 11, the LMF changes the LMF-side model to model1 1. Thus, the matching between the UE-side model and the LMF-side model is completed, and the model used meets the model performance requirement. Interaction information involved in this procedure may be direct interaction between the UE and the LMF, or the UE and the LMF may be relayed through the base station, or it may be interaction between the UE and the base station.

Example 3: in case that the UE monitors that the performance of the UE-side model is poor, the UE falls back the UE-side model to a non-AI/ML-model-based operation mode. The UE transmits one piece of indication information to the LMF to indicate that the UE-side model fell back to a non-AI/ML-model-based operation mode. After receiving this indication information, the LMF falls back the LMF-side model to a non-AI/ML-model-based operation mode. Interaction information involved in this procedure may be direct interaction between the UE and the LMF, or the UE and the LMF may be relayed through the base station, or it may be interaction between the UE and the base station.

In case that LMF monitors that the performance of the LMF-side model is poor:
possible UE behaviors and LMF behaviors are the same as the UE behaviors and network behaviors in step 4 of embodiment 1-2, and specific examples are as follows.

Example 1: in case that the LMF monitors that the performance of the LMF-side model is poor, LMF transmits one piece of indication information to the UE to notify that the performance of the LMF-side model is poor/needs to be changed. After receiving this indication information, the UE selects a UE-side model to change based on the priority information configured by the base station/LMF. If the priority of the UE-side models is model1, model5, model6, model2, model3, model4, the UE then changes the UE-side model to model5. The UE transmits the identity information of the LMF-side model corresponding to model5 to the LMF, that is, model11. The identity information of model1 1 may be 11. In case that the LMF receives this identity information, that is, 11, the LMF changes the LMF-side model to model1 1. Thus, the matching between the UE-side model and the LMF-side model is completed, and the model used meets the model performance requirement. Interaction information involved in this procedure may be direct interaction between the UE and the LMF, or the UE and the LMF may be relayed through the base station, or it may be interaction between the UE and the base station.

Example 2: in case that the LMF monitors that the performance of the LMF-side model is poor, LMF changes the LMF-side model to model12, and the LMF transmits the identity information of the UE-side model model6 corresponding to model12 to the UE, and the identity information of model6 may be 6. After receiving the identity information of model6, that is, 6, transmitted from the network, the UE changes the UE-side model from model1 to model6. Thus, the matching between the UE-side model and the LMF-side model is completed, and the model used meets the model performance requirement. Interaction information involved in this procedure may be direct interaction between the UE and the LMF, or the UE and the LMF may be relayed through the base station, or it may be interaction between the UE and the base station.

Example 3: in case that the LMF monitors that the performance of the LMF-side model is poor, the LMF falls back the LMF-side model to a non-AI/ML-model-based operation mode. The LMF transmits one piece of indication information to UE to indicate the UE to fall back the UE-side model to a non-AI/ML-model-based operation mode. After receiving this indication information, the UE falls back the UE-side model to a non-AI/ML-model-based operation mode. Interaction information involved in this procedure may be direct interaction between the UE and the LMF, or the UE and LMF may be relayed through the base station, or it may be interaction between the UE and the base station.

Embodiment 2-2: separate monitoring and joint changing. A user equipment (UE) monitors a UE-side model and a network-side model.

A positioning accuracy use case is taken as an example (this method is not limited to this scenario).

Case 1: in case that the UE monitors that performance of the UE-side model is poor, the UE and LMF behaviors are the same as the UE behavior and LMF behavior in case that the UE monitors performance of the UE-side model is poor in step 4 of embodiment 2-1.

Case 2: in case that the UE monitors that performance of the LMF-side model is poor, the UE may transmit one piece of indication information to the LMF to indicate that the performance of the LMF-side model is poor. In case that the LMF receives the indication information from the UE, the UE behavior and LMF behavior in case that the LMF monitors the performance of the LMF-side model is poor in step 4 of embodiment 2-1 may be performed. The UE behavior and LMF behavior in case that the UE monitors the performance of the UE-side model is poor in step 4 of embodiment 2-1 also may be performed.

### Similar descriptions are not repeated here.

Embodiment 2-3: separate monitoring and joint changing. A network monitors a UE-side model and a network-side model.

A positioning accuracy use case is taken as an example (this method is not limited to this scenario).

Case 1: in case that the LMF monitors that performance of the LMF-side model is poor, the UE behavior and LMF behavior are the same as the UE behavior and LMF behavior in case that the LMF monitors performance of the LMF-side model is poor in step 4 of embodiment 2-1.

Case 2: in case that the LMF monitors that performance of the UE-side model is poor, the LMF may transmit one piece of indication information to the UE, indicating that the performance of the UE-side model is poor. In case that the UE receives the indication information from the LMF, the UE behavior and LMF behavior in case that the UE monitors the performance of the UE-side model is poor in step 4 of embodiment 2-1 may be performed. The UE behavior and LMF behavior in case that the LMF monitors the performance of the LMF-side model is poor in step 4 of embodiment 2-1 also may be performed.

### Similar descriptions are not repeated here.

The methods and the devices provided in the embodiments of the present application are based on the same concept, and since the principles of the methods and the devices to solve the problem are similar, the implementation of the devices and the methods may be referred to each other, and the details are not repeated.

FIG. 3 is a schematic structural diagram of a first communication device according to an embodiment of the present application. As shown in FIG. 3, the first communication device includes a memory 320, a transceiver 310, and a processor 300, wherein the processor 300 and the memory 320 may also be arranged physically separately.

The memory 320 is used for storing a computer program, the transceiver 310 is used for receiving and transmitting data under control of the processor 300.

The transceiver 310 is used for receiving and transmitting data under control of the processor 300.

In FIG. 3, a bus architecture may include any number of interconnected buses and bridges, which are linked together through various circuits of one or more processors represented by the processor 300 and one or more memories represented by the memory 320. The bus architecture may also link together various other circuits, such as peripherals, voltage regulators, and power management circuits, which are well known in the art, and therefore are not be further described in the present application. The bus interface provides an interface. The transceiver 310 may include multiple elements, i.e., include a transmitter and a receiver, units for providing communication with various other devices over transmission media including wireless channels, wired channels, fiber optic cables, and the like.

The processor 300 is responsible for managing the bus architecture and general processing, and the memory 320 may store data used by the processor 300 when performing operations.

The processor 300 may be a central processing unit (CPU), an application specific integrated circuit (ASIC), a field-programmable gate array (FPGA), or a complex programmable logic device (CPLD), the processor may also use a multi-core architecture.

The processor 300 is used to perform any of the methods performed by the UE provided in the embodiments of the present application when executing the executable instructions by calling the computer program stored in the memory 320, for example:
in case of monitoring that performance of at least one-side artificial intelligence (AI)/machine learning (ML) model or a two-side AI/ML model pair of a two-sided AI/ML model does not meet a model performance requirement, transmitting first information to a second communication device, where the first information includes information associated with monitoring the two-sided AI/ML model.

In any embodiment of the present application, the first information may include one or more of the following:
first indication information, used to indicate that performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, the method further includes:
changing a first-communication-device-side AI/ML model or falling back a first-communication-device-side AI/ML model to a non-AI/ML-model-based operation mode.

In any embodiment of the present application, a changed first-communication-device-side AI/ML model is determined based on one or more of the following:
a priority order of AI/ML models; or
a mapping relationship between an AI/ML model and an applicable scenario; or
randomly selecting an AI/ML model.

In any embodiment of the present application, changing the first-communication-device-side AI/ML model or falling back the first-communication-device-side AI/ML model to the non-AI/ML-model-based operation mode includes:
based on second information transmitted from the second communication device, changing the first-communication-device-side AI/ML model or falling back the first-communication-device-side AI/ML model to the non-AI/ML-model-based operation mode;
where the second information includes one or more types of the following:
   sixth indication information, used to indicate the first communication device to change a first-communication-device-side AI/ML model or fall back a first-communication-device-side AI/ML model to a non-AI/ML-model-based operation mode;
   identity information of a changed first-communication-device-side AI/ML model; or
   identity information of a first-communication-device-side AI/ML model corresponding to a changed second communication device-side AI/ML model.

In any embodiment of the present application, the method further includes:
receiving monitoring configuration information, where the monitoring configuration information includes one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

In any embodiment of the present application, the identity information of the AI/ML model includes one or more of the following:
a model identity of an AI/ML model;
a model configuration identity of an AI/ML model;
a parameter value of an AI/ML model; or
input and output information of an AI/ML model.

In any embodiment of the present application, monitoring that the performance of the at least one-side AI/ML model or the two-side AI/ML model pair of the two-sided AI/ML model does not meet the model performance requirement includes any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

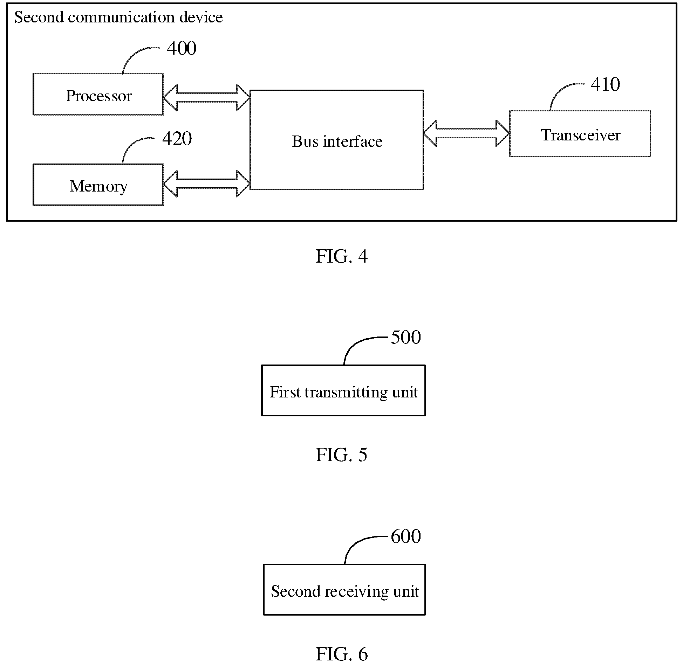

FIG. 4 is a schematic structural diagram of a second communication device according to an embodiment of the present application. As shown in FIG. 4, the second communication device includes a memory 420, a transceiver 410, and a processor 400, where the processor 400 and the memory 420 may also be arranged physically separately.

The memory 420 is used for storing a computer program, the transceiver 410 is used for receiving and transmitting data under control of the processor 400.

The transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, which are well known in the art, and therefore are not be further described in the present application. The bus interface provides an interface. The transceiver 410 may include multiple elements, i.e., include a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 400 when performing operations]

The processor 400 may be a CPU, ASIC, FPGA or CPLD, and the processor may also use a multi-core architecture.

The processor 400 is configured to perform any of the methods of the embodiments of the present application when executing the executable instructions by calling the computer program stored in the memory 420. The method includes:
receiving first information transmitted from a first communication device, where the first information includes information associated with monitoring a two-sided artificial intelligence (AI)/machine learning (ML) model.

In any embodiment of the present application, the first information includes one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, after receiving first information transmitted from the first communication device, the method further includes:
transmitting second information to the first communication device, where the second information includes one or more types of the following:
sixth indication information, used to indicate the first communication device to change a first-communication-device-side AI/ML model or fall back a first-communication-device-side AI/ML model to a non-AI/ML-model-based operation mode;
identity information of a changed first-communication-device-side AI/ML model; or
identity information of a first-communication-device-side AI/ML model corresponding to a changed second communication device-side AI/ML model.

It should be noted here that the above-mentioned first communication device and the second communication device according to the embodiments of the present application can implement all the method steps implemented by the above-mentioned method embodiments, and can achieve the same effect. The same parts and beneficial effects as the same method embodiments are not be repeated here.

FIG. 5 is a first schematic structural diagram of an apparatus for artificial intelligence (AI)/machine learning (ML) model monitoring according to an embodiment of the present application. As shown in FIG. 5, the apparatus includes:
a first transmitting unit 500, used for in case of monitoring that performance of at least one-side AI/ML model or a two-side AI/ML model pair of a two-sided AI/ML model does not meet a model performance requirement, transmitting first information to a second communication device, where the first information includes information associated with monitoring the two-sided AI/ML model.

In any embodiment of the present application, the first information may include one or more of the following:
first indication information, used to indicate that performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, the apparatus further includes:
a change or fallback unit, used for changing a first-communication-device-side AI/ML model or falling back a first-communication-device-side AI/ML model to a non-AI/ML-model-based operation mode.

In any embodiment of the present application, a changed first-communication-device-side AI/ML model is determined based on one or more of the following:
a priority order of AI/ML models; or
a mapping relationship between an AI/ML model and an applicable scenario; or
randomly selecting an AI/ML model.

In any embodiment of the present application, changing the first-communication-device-side AI/ML model or falling back the first-communication-device-side AI/ML model to the non-AI/ML-model-based operation mode includes:
based on second information transmitted from the second communication device, changing the first-communication-device-side AI/ML model or falling back the first-communication-device-side AI/ML model to the non-AI/ML-model-based operation mode;
where the second information includes one or more types of the following:
   sixth indication information, used to indicate the first communication device to change a first-communication-device-side AI/ML model or fall back a first-communication-device-side AI/ML model to a non-AI/ML-model-based operation mode;
   identity information of a changed first-communication-device-side AI/ML model; or
   identity information of a first-communication-device-side AI/ML model corresponding to a changed second communication device-side AI/ML model.

In any embodiment of the present application, the apparatus further includes:
a first receiving unit, used for receiving monitoring configuration information, where the monitoring configuration information includes one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

In any embodiment of the present application, the identity information of the AI/ML model includes one or more of the following:
a model identity of an AI/ML model;
a model configuration identity of an AI/ML model;
a parameter value of an AI/ML model; or
input and output information of an AI/ML model.

In any embodiment of the present application, monitoring that the performance of the at least one-side AI/ML model or the two-side AI/ML model pair of the two-sided AI/ML model does not meet the model performance requirement includes any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

FIG. 6 is a second schematic structural diagram of an apparatus for artificial intelligence (AI)/machine learning (ML) model monitoring according to an embodiment of the present application. As shown in FIG. 6, the apparatus includes:
a second receiving unit 600, used for receiving first information transmitted from a first communication device, where the first information includes information associated with monitoring a two-sided AI/ML model.

In any embodiment of the present application, the first information includes one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

In any embodiment of the present application, the apparatus further includes:
a second transmitting unit, used for transmitting second information to the first communication device, where the second information includes one or more types of the following:
sixth indication information, used to indicate the first communication device to change a first-communication-device-side AI/ML model or fall back a first-communication-device-side AI/ML model to a non-AI/ML-model-based operation mode;
identity information of a changed first-communication-device-side AI/ML model; or
identity information of a first-communication-device-side AI/ML model corresponding to a changed second communication device-side AI/ML model.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted here that the above-mentioned apparatus according to the embodiments of the present application may implement all the method steps implemented by the above-mentioned method embodiments, and may achieve the same effect. The same parts and beneficial effects as the same method embodiments are not repeated here.

An embodiment of the present application further provides a computer-readable storage medium, where the computer-readable storage medium stores a computer program and the computer program causes a computer to perform any of the methods for artificial intelligence (AI)/machine learning (ML) model monitoring described above.

It should be noted here that the above-mentioned computer-readable storage medium according to the embodiments of the present application may implement all the method steps implemented by the above-mentioned method embodiments, and may achieve the same effect. The same parts and beneficial effects as the same method embodiments are not repeated here.

The computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be called as user equipment (UE). A wireless terminal device may communicate with one or more core networks (CN) via a radio access network (RAN), and the wireless terminal device may be a mobile terminal device, such as a mobile phone (or referred to as cellular phone) and a computer with mobile terminal device, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for artificial intelligence (AI)/machine learning (ML) model monitoring, performed by a first communication device, comprising:
in case of monitoring that performance of at least one-side AI/ML model or a two-side AI/ML model pair of a two-sided AI/ML model does not meet a model performance requirement, transmitting first information to a second communication device, wherein the first information comprises information associated with monitoring the two-sided AI/ML model.

2. The method of claim 1, wherein the first information comprises one or more types of the following:
first indication information, used to indicate that the performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

3. The method of claim 1 or 2, further comprising:
changing a first-communication-device-side AI/ML model or falling back a first-communication-device-side AI/ML model to a non-AI/ML-model-based operation mode.

4. The method of claim 3, wherein a changed first-communication-device-side AI/ML model is determined based on one or more of the following:
a priority order of AI/ML models; or
a mapping relationship between an AI/ML model and an applicable scenario; or
randomly selecting an AI/ML model.

5. The method of claim 3, wherein changing the first-communication-device-side AI/ML model or falling back the first-communication-device-side AI/ML model to the non-AI/ML-model-based operation mode comprises:
based on second information transmitted from the second communication device, changing the first-communication-device-side AI/ML model or falling back the first-communication-device-side AI/ML model to the non-AI/ML-model-based operation mode;
wherein the second information comprises one or more types of the following:
sixth indication information, used to indicate the first communication device to change the first-communication-device-side AI/ML model or fall back the first-communication-device-side AI/ML model to the non-AI/ML-model-based operation mode;
identity information of a changed second communication device-side AI/ML model; or
identity information of a first-communication-device-side AI/ML model corresponding to a changed second communication device-side AI/ML model.

6. The method of any of claims 1 to 5, further comprising:
receiving monitoring configuration information, wherein the monitoring configuration information comprises one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

7. The method of claim 2 or 5 or 6, wherein the identity information of the AI/ML model comprises one or more of the following:
a model identity of an AI/ML model;
a model configuration identity of an AI/ML model;
a parameter value of an AI/ML model; or
input and output information of an AI/ML model.

8. The method of claim 1, wherein monitoring that the performance of the at least one-side AI/ML model or the two-side AI/ML model pair of the two-sided AI/ML model does not meet the model performance requirement comprises any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

9. A method for artificial intelligence (AI)/machine learning (ML) model monitoring, performed by a second communication device, comprising:
receiving first information transmitted from a first communication device, wherein the first information comprises information associated with monitoring a two-sided AI/ML model.

10. The method of claim 9, wherein the first information comprises one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

11. The method of claim 9 or 10, wherein after receiving the first information transmitted from the first communication device, the method further comprises:
transmitting second information to the first communication device, wherein the second information comprises one or more types of the following:
sixth indication information, used to indicate the first communication device to change a first-communication-device-side AI/ML model or fall back a first-communication-device-side AI/ML model to a non-AI/ML-model-based operation mode;
identity information of a changed second communication device-side AI/ML model; or
identity information of a first-communication-device-side AI/ML model corresponding to a changed second communication device-side AI/ML model.

12. A first communication device, comprising a memory, a transceiver and a processor,
wherein the memory is used for storing a computer program, the transceiver is used for receiving and transmitting data under control of the processor and the processor is used for reading the computer program in the memory and performing the following operations:
in case of monitoring that performance of at least one-side artificial intelligence (AI)/machine learning (ML) model or a two-side AI/ML model pair of a two-sided AI/ML model does not meet a model performance requirement, transmitting first information to a second communication device, wherein the first information comprises information associated with monitoring the two-sided AI/ML model.

13. The first communication device of claim 12, wherein the first information comprises one or more types of the following:
first indication information, used to indicate that the performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

14. The first communication device of claim 12 or 13, wherein the operations further comprise:
changing a first-communication-device-side AI/ML model or falling back a first-communication-device-side AI/ML model to a non-AI/ML-model-based operation mode.

15. The first communication device of claim 14, wherein a changed first-communication-device-side AI/ML model is determined based on one or more of the following:
a priority order of AI/ML models; or
a mapping relationship between an AI/ML model and an applicable scenario; or
randomly selecting an AI/ML model.

16. The first communication device of claim 14, wherein changing the first-communication-device-side AI/ML model or falling back the first-communication-device-side AI/ML model to the non-AI/ML-model-based operation mode comprises:
based on second information transmitted from the second communication device, changing the first-communication-device-side AI/ML model or falling back the first-communication-device-side AI/ML model to the non-AI/ML-model-based operation mode;
wherein the second information comprises one or more types of the following:
sixth indication information, used to indicate the first communication device to change the first-communication-device-side AI/ML model or fall back the first-communication-device-side AI/ML model to the non-AI/ML-model-based operation mode;
identity information of a changed second communication device-side AI/ML model; or
identity information of a first-communication-device-side AI/ML model corresponding to a changed second communication device-side AI/ML model.

17. The first communication device of any of claims 12 to 16, wherein the operations further comprise:
receiving monitoring configuration information, wherein the monitoring configuration information comprises one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

18. The first communication device of claim 13 or 16 or 17, wherein the identity information of the AI/ML model comprises one or more of the following:
a model identity of an AI/ML model;
a model configuration identity of an AI/ML model;
a parameter value of an AI/ML model; or
input and output information of an AI/ML model.

19. The first communication device of claim 12, wherein monitoring that the performance of the at least one-side AI/ML model or the two-side AI/ML model pair of the two-sided AI/ML model does not meet the model performance requirement comprises any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

20. A second communication device, comprising a memory, a transceiver and a processor,
wherein the memory is used for storing a computer program, the transceiver is used for receiving and transmitting data under control of the processor and the processor is used for reading the computer program in the memory and performing the following operations:
receiving first information transmitted from a first communication device, wherein the first information comprises information associated with monitoring a two-sided artificial intelligence (AI)/machine learning (ML) model.

21. The second communication device of claim 20, wherein the first information comprises one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

22. The second communication device of claim 20 or 21, wherein after receiving the first information transmitted from the first communication device, the operations further comprise:
transmitting second information to the first communication device, wherein the second information comprises one or more types of the following:
sixth indication information, used to indicate the first communication device to change a first-communication-device-side AI/ML model or fall back a first-communication-device-side AI/ML model to a non-AI/ML-model-based operation mode;
identity information of a changed second communication device-side AI/ML model; or
identity information of a first-communication-device-side AI/ML model corresponding to a changed second communication device-side AI/ML model.

23. An apparatus for artificial intelligence (AI)/machine learning (ML) model monitoring, comprising:
a first transmitting unit, used for in case of monitoring that performance of at least one-side AI/ML model or a two-side AI/ML model pair of a two-sided AI/ML model does not meet a model performance requirement, transmitting first information to a second communication device, wherein the first information comprises information associated with monitoring the two-sided AI/ML model.

24. The apparatus of claim 23, wherein the first information comprises one or more types of the following:
first indication information, used to indicate that the performance of the at least one-side AI/ML model or the two-side AI/ML model pair of the two-sided AI/ML model does not meet the model performance requirement;
second indication information, used to indicate that the at least one-side AI/ML model or the two-side AI/ML model pair of the two-sided AI/ML model needs to be changed;
third indication information, used to indicate that the at least one-side AI/ML model or the two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

25. The apparatus of claim 23 or 24, further comprising:
a change or fallback unit, used for changing a first-communication-device-side AI/ML model or falling back a first-communication-device-side AI/ML model to a non-AI/ML-model-based operation mode.

26. The apparatus of claim 25, wherein a changed first-communication-device-side AI/ML model is determined based on one or more of the following:
a priority order of AI/ML models; or
a mapping relationship between an AI/ML model and an applicable scenario; or
randomly selecting an AI/ML model.

27. The apparatus of claim 25, wherein changing the first-communication-device-side AI/ML model or falling back the first-communication-device-side AI/ML model to the non-AI/ML-model-based operation mode comprises:
based on second information transmitted from the second communication device, changing the first-communication-device-side AI/ML model or falling back the first-communication-device-side AI/ML model to the non-AI/ML-model-based operation mode;
wherein the second information comprises one or more types of the following:
sixth indication information, used to indicate the first communication device to change the first-communication-device-side AI/ML model or fall back the first-communication-device-side AI/ML model to the non-AI/ML-model-based operation mode;
identity information of a changed second communication device-side AI/ML model; or
identity information of a first-communication-device-side AI/ML model corresponding to a changed second communication device-side AI/ML model.

28. The apparatus of any of claims 23 to 27, further comprising:
a first receiving unit, used for receiving monitoring configuration information, wherein the monitoring configuration information comprises one or more of the following:
identity information of an AI/ML model that needs to be monitored;
a monitoring cycle of an AI/ML model;
a monitoring duration of an AI/ML model;
a monitoring metric of an AI/ML model;
a monitoring metric threshold of an AI/ML model;
mapping information of a model pair between a first-communication-device-side AI/ML model and a second communication device-side AI/ML model;
priority information of an AI/ML model; or
mapping information between an AI/ML model and an applicable scenario.

29. The apparatus of claim 24 or 27 or 28, wherein the identity information of the AI/ML model comprises one or more of the following:
a model identity of an AI/ML model;
a model configuration identity of an AI/ML model;
a parameter value of an AI/ML model; or
input and output information of an AI/ML model.

30. The apparatus of claim 23, wherein monitoring that the performance of the at least one-side AI/ML model or the two-side AI/ML model pair of the two-sided AI/ML model does not meet the model performance requirement comprises any of the following:
monitoring that performance of a first-communication-device-side AI/ML model does not meet the model performance requirement; or
monitoring that performance of a second communication device-side AI/ML model does not meet the model performance requirement; or
monitoring that performance of both a first-communication-device-side AI/ML model and a second communication device-side AI/ML model do not meet the model performance requirement; or
monitoring that performance of a two-side AI/ML model pair corresponding to a first communication device side and a second communication device side does not meet the model performance requirement.

31. An apparatus for artificial intelligence (AI)/machine learning (ML) model monitoring, comprising:
a second receiving unit, used for receiving first information transmitted from a first communication device, wherein the first information comprises information associated with monitoring a two-sided AI/ML model.

32. The apparatus of claim 31, wherein the first information comprises one or more types of the following:
first indication information, used to indicate that performance of at least one-side AI/ML model or a two-side AI/ML model pair of the two-sided AI/ML model does not meet a model performance requirement;
second indication information, used to indicate that at least one-side AI/ML model or a two-side AI/ML model pair of the two-sided AI/ML model needs to be changed;
third indication information, used to indicate that at least one-side AI/ML model or a two-side AI/ML model pair of the two-sided AI/ML model needs to fall back to a non-AI/ML-model-based operation mode;
fourth indication information, used to indicate that a first-communication-device-side AI/ML model is changed;
identity information of a changed first-communication-device-side AI/ML model;
identity information of a second communication device-side AI/ML model corresponding to a changed first-communication-device-side AI/ML model; or
fifth indication information, used to indicate that a first-communication-device-side AI/ML model fell back to a non-AI/ML-model-based operation mode.

33. The apparatus of claim 31 or 32, wherein after receiving the first information transmitted from the first communication device, the apparatus further comprises:
a second transmitting unit, used for transmitting second information to the first communication device, wherein the second information comprises one or more types of the following:
sixth indication information, used to indicate the first communication device to change a first-communication-device-side AI/ML model or fall back a first-communication-device-side AI/ML model to a non-AI/ML-model-based operation mode;
identity information of a changed second communication device-side AI/ML model; or
identity information of a first-communication-device-side AI/ML model corresponding to a changed second communication device-side AI/ML model.

34. A computer-readable storage medium storing a computer program, wherein the computer program causes, a computer to perform the method of any of claims 1 to 8 or perform the method of any of claims 9 to 11.
